(19) Europäisches Patentamt
European Patent Office
Office européen des brevets

(11) **EP 4 120 038 A1**

(12) **EUROPÄISCHE PATENTANMELDUNG**

(43) Veröffentlichungstag:
**18.01.2023  Patentblatt 2023/03**

(21) Anmeldenummer: **22184559.7**

(22) Anmeldetag: **12.07.2022**

(51) Internationale Patentklassifikation (IPC):
***G05B 23/02*** *(2006.01)*

(52) Gemeinsame Patentklassifikation (CPC):
**G05B 23/024; G05B 23/0281**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **15.07.2021  DE 102021118325**

(71) Anmelder: **ifm electronic gmbh**
**45128 Essen (DE)**

(72) Erfinder:
• **HOFFMANN, Alexander**
**57074 Siegen (DE)**

• **VARMA, Roger**
**Newtown Square, PA 19073 (US)**
• **AJOUZ, Ali**
**57223 Kreuztal (DE)**
• **KLEMM, Matthias**
**57584 Scheuerfeld (DE)**
• **BOGUNIA, Lukas**
**58840 Plettenberg (DE)**
• **FRIEDRICH, Christian**
**57072 Siegen (DE)**

(74) Vertreter: **Otten, Roth, Dobler & Partner mbB**
**Patentanwälte**
**Großtobeler Straße 39**
**88276 Berg / Ravensburg (DE)**

(54) **ÜBERWACHUNGSVERFAHREN ZUR FEHLERERKENNUNG EINES MASCHINEN- BZW. HARDWAREFEHLERS**

(57)   Vorgeschlagen wird ein bei der Fehlererkennung zuverlässigeres computerimplementiertes Überwachungsverfahren (1) zur Fehlererkennung eines Maschinenfehlers mit einer statistischen Auswertung (4) der wenigstens einen Serie oder wenigstens eines Teils davon, um jeweils eine Abweichung der gemessenen Sensordaten (5) nach wenigstens einem Kriterium (I, II, III) zu ermitteln, wobei die statistische Auswertung eine Nullhypothese und einen Erwartungswert bereitstellt und die statistische Signifikanz hinsichtlich einer Abweichung von einer vorgegebenen Nullhypothese berechnet, um eine Warnung auszugeben, wenn die statistische Signifikanz von der Nullhypothese abweicht und/oder bei einem vorgegebenen Signifikanzlevel $\alpha$ die Wahrscheinlichkeit eines Abweichens von der Nullhypothese größer als der Signifikanzlevel $\alpha$ ist.

Fig. 1

EP 4 120 038 A1

**Beschreibung**

Die Erfindung betrifft ein computerimplementiertes Überwachungsverfahren zur Fehlererkennung eines Maschinen- bzw. Hardwarefehlers.

Aus dem Stand der Technik ist bekannt, maschinell ausgeführte Prozesse dahingehend zu überwachen, ob Fehler oder Ausfälle bei den verwendeten Maschinen, Rechnern, usw. auftreten. Zu diesem Zweck werden typischerweise Sensoren eingesetzt, welche kontinuierlich während des Prozessablaufs Daten aufnehmen, die nach einem festgelegten Kriterium ausgewertet werden, um zu entscheiden, ob ein Fehler vorliegt oder nicht. Aus der DE 10 2018 222 562 A1 ist so z.B. bekannt, einen Fehlerzustand in einem Erregerkreis einer elektrischen Maschine zu erkennen, wobei als sensorisch erfasste Vergleichssignale der Erregerstrom und das Ansteuersignal mit Referenzwerten gefiltert und verglichen werden. Aus der EP 0 934 567 A1 ist ein Verfahren zur Klassifikation der statistischen Abhängigkeit einer messbaren Zeitreihe bekannt, bei dem iterative Test mit verschiedenen Nullhypothesen beschrieben werden. Aus der DE 10 2019 107 363 A1 wiederum ist ein computerimplementiertes Verfahren zur Ausgabe eines Abnutzungssignals einer Werkzeugmaschine mit einer sogenannte "Change Point Detection" mit Abstandsmetrik bekannt. Dieses Verfahren ist jedoch in der Regel nicht zuverlässig genug für Langzeitbeobachtungen rund um die Uhr.

Aufgabe der Erfindung ist es, ein Überwachungsverfahren zur Fehlererkennung vorschlagen zu können, welches eine besonders zuverlässige Fehlererkennung ermöglicht.

Die Aufgabe wird, ausgehend von bisherigen, aus dem Stand der Technik bekannten Überwachungsverfahren, durch die Merkmale des Anspruchs 1 gelöst.

Durch die in den abhängigen Ansprüchen genannten Maßnahmen sind vorteilhafte Ausführungen und Weiterbildungen der Erfindung möglich.

Dementsprechend umfasst das erfindungsgemäße Überwachungsverfahren zur Fehlererkennung eines Maschinenfehlers bzw. eines Hardwarefehlers bei einem maschinell ausgeführten Prozess zunächst ebenfalls die Erfassung wenigstens einer Serie von während des Prozessablaufs gemessenen Sensordaten. Diese sensorisch erfassten Daten werden oftmals in zeitlicher Folge aufgenommen. Denkbar ist aber z.B. auch, dass die Serie an Sensordaten eine örtliche Abfolge oder einen örtlichen Verlauf darstellt, etwa wenn sensorisch erfasst werden soll, ob zwischen zwei Teilen stets der gleiche Abstand eingehalten wird oder ob ein Bauteil nicht aufgrund von Erwärmung, Unwuchten oder sonstigen Unregelmäßigkeiten seine vorgesehene Lagerungsposition verlässt.

Die Lehre der Erfindung zeichnet sich dadurch aus, dass die angestrebte Fehlererkennung auch eine Fehlervorhersage umfassen kann. Bei der Erfindung wurde erkannt, dass sich Maschinen- bzw. Hardwarefehler oftmals "ankündigen", d.h. es tritt selten ein plötzlicher Spontanausfall der Maschine ohne jegliche Anzeichen auf, vielmehr treten symptomatische Erscheinungen auf, die auf den Fehler hindeuten und die messbar sind, weil z.B. Messgrößen im Zusammenhang mit der Maschine / Hardware sich allmählich verändern. Die geänderten Messgrößen können in der Regel sensorisch erfasst werden, etwa ein Ausgangsstrom, ein Eingangsstrom, eine Drehzahl (z.B. bei einem Gebläse), usw. Nicht selten kann die Maschine bzw. die Hardware weiter ihre Arbeit ausführen, mitunter zunächst sogar ohne oder ohne merklichen Qualitätsverlust bei der Produktion, bis die Maschine dann einen größeren Ausfall erleidet.

Insofern ermöglicht die Erfindung es auch, Wartungsintervalle zu optimieren, d.h. bei bestehenden Maschinenbeständen vorherzusagen, wann eine Wartung fällig wird und wie lang oder kurz die Wartungsintervalle gesetzt werden sollten.

Gemäß der Erfindung wurde die Schwierigkeit erkannt, dass die gemessenen Sensordaten von statistischen Fehler, insbesondere einem statistischen Rauschen überdeckt sind, wodurch erschwert wird, eine Auswertung einzelner gemessener Sensordaten durchzuführen, da diese statistischen Fehlern unterworfen sind und von vorgegebenen Sollwerten abweichen können, obgleich kein Fehler vorliegt.

Es wurde erkannt, dass zum Beispiel eine solche sensorisch erfasste Größe im Mittel sich nicht oder nur langsam verändert, die statistischen Schwankungen dieser Größe um einen Erwartungswert herum jedoch zunehmen.

Darüber hinaus wird gemäß der Erfindung erstmals berücksichtigt, dass auftretende Fehler sich oftmals in verschiedener Hinsicht auf die erfassten Sensordaten auswirken können. Erfindungsgemäß wird daher bei der Auswertung und Untersuchung auf statistische Unregelmäßigkeiten eingegangen, also zunächst unabhängig von deren Fehlerursache, weil einfache Vergleiche und Erfassung von Einzelwertabweichungen sich als unzureichendes Kriterium erwiesen haben, um eine sichere Fehlererkennung zu ermöglichen. Das erfindungsgemäße Verfahren kann daher universell für eine Vielzahl an Anwendungen verwendet werden, da keine speziellen Voraussetzungen hinsichtlich der überwachten Maschinen notwendig sind und in der Regel auch nur das generelle zu erwartende Verhalten einer sensorisch erfassten Messgröße bekannt sein muss, auch wenn es sich z.B. nur um einen über die Zeit konstanten Wert handelt.

In vorteilhafter Weise stellt ein Ausführungsbeispiel der Erfindung somit auch ein mehrstufiges, wenigstens dreistufiges Warnsystem zur Verfügung, bei dem je nach Anzahl der erfüllten Kriterien bei der Fehlererkennung eine eigene Warnstufe angezeigt wird. Auf diese Weise wird zugleich ein Überwachungsverfahren bereitgestellt, das eine Gewichtung der auftretenden Fehler vornimmt, sodass der Bediener auf die Schwere der Unregelmäßigkeiten aufmerksam gemacht wird und auch gezielter abwägen kann, ob und mit welchen Maßnahmen in einen Prozess bzw. die Ausführung einer Maschine eingegriffen werden soll.

Die Erfindung ist vor allem für Systeme geeignet, die im Dauerbetrieb eingesetzt werden. Als Beispiele seien die Überwachung von Vakuumpumpen für Reinraumanwendungen oder die Überwachung für Lüfter erwähnt, die im 24-Stunden-Betrieb 7 Tage die Woche betrieben werden. Aus der erfindungsgemäßen Analyse des Schwingungssignals kann vorteilhafterweise sehr frühzeitig ein Hinweis auf eine beginnende Schädigung gewonnen werden, sodass die Maschine bzw. Anlage rechtzeitig repariert bzw. gewartet werden kann, bevor ein größerer Schaden und Ausfall entsteht. Aus mehreren solcher Hinweise kann auch eine Anpassung der Wartungsintervalle vorgenommen werden, wenn nämlich abgeschätzt werden kann, wie häufig eine solche Schädigung im Betriebsablauf vorkommt und wann damit zu rechnen ist. Das System ist für Langzeitüberwachungen an verschiedene Anwendungen sehr schnell adaptierbar. Bei einer bevorzugten Weiterbildung werden als Sensoren Schwingungssensoren eingesetzt, um z.B. Lüfter, Lager, Pumpen, Vakuumpumpen oder sonstige Motoren im Dauerbetrieb zu überwachen.

Eine vorteilhafte Anwendung könnte zum Beispiel im Bereich der Medizintechnik vorliegen, bei der es zu einer Wechselwirkung technischer und biologischer Prozesse kommt, wodurch statistische Abweichungen begünstigt werden und eine Fehlererkennung, die ein Eingreifen bedingt, umso schwieriger von einer einfachen statistischen Abweichung zu unterscheiden ist. Eine andere vorteilhafte Anwendung besteht im Bereich der Kühlung von Produktionsprozessen.

Gemäß der Erfindung ist daher eine statistische Auswertung wenigstens einer aufgenommenen Serie oder eines Teils der wenigstens einen aufgenommenen Serie vorgesehen. Bei einem vorteilhaften Ausführungsbeispiel werden darüber hinaus wenigstens drei Kriterien dabei abgeprüft, um so auch je nachdem, wie viele dieser Kriterien auf einmal erfüllt sind, entsprechende Warnstufen zuordnen zu können.

Das erfindungsgemäße Überwachungsverfahren wird im Allgemeinen als computerimplementiertes Verfahren ausgeführt, bei dem eine elektronische bzw. rechnergestützte Auswertung der Sensordaten erfolgt. Es überwindet somit auch das technische Vorurteil, dass mit statistischen Fehler bzw. mit Rauschen behaftete Signale aus Fehler und Plausibilität statistisch nicht ausgewertet werden können.

Die statistische Auswertung gemäß der Erfindung erfolgt unter Aufstellung einer Nullhypothese. Wird von der Nullhypothese abgewichen oder liegt die Wahrscheinlichkeit, dass von der Nullhypothese abgewichen wird, oberhalb eines vorgegebenen Signifikanzlevels a, so wird eine Warnung ausgegeben.

Bei besonders bevorzugten Weiterbildungen der Erfindung kann zum Beispiel wenigstens eines der folgenden drei Kriterien bei der statistischen Auswertung überprüft werden:

- Ein typischer, mit statistischen Methoden zu erkennender Fehler besteht darin, dass ein Sprung des mittleren Sensordatenniveaus in zeitlicher bzw. örtlicher Abfolge vorliegt. Dieser Sprung ist zu unterscheiden von Einzelabweichungen, die durch Rauschen und somit rein statistisch bedingt sind, ohne dass ein Fehler im eigentlichen Sinn vorliegt. Ein solcher Fehler in Form eines Sprunges kann zum Beispiel vorliegen, wenn die zu vermessende Größe tatsächlich einer plötzlich auftretenden, aber andauernden Änderung unterworfen ist, also von einem stationären Verhalten abweicht. Denkbar ist zum Beispiel aber auch ein sensorbedingter Fehler, der zu dieser Niveauabweichung führt. Der Mittelwert, zumindest über größere zeitliche oder örtliche Intervalle gemittelt, ändert sich also im zeitlichen Verlauf.

- Ein weiterer, mit statistischen Methoden zu erkennender Fehler kann darin bestehen, dass die gemessenen Sensordaten sich stetig gemäß einem gleichbleibenden Trend verändern ("weglaufen"). Auch in diesem Fall liegt also eine Abweichung vom stationären Verhalten vor. Der Mittelwert im zeitlichen Verlauf ändert sich kontinuierlich.

- Auch wenn der Mittelwert über größere zeitliche oder örtliche Intervalle gemittelt konstant bleibt, kann die Schwankungsanfälligkeit bzw. Volatilität bei einem Fehler aber sehr stark variieren bzw. insbesondere zunehmen.

Bei einer Ausführungsform der Erfindung kann das zu erwartende Verhalten durch eine Modellfunktion beschrieben werden, die sich aus einer Summe einer Funktion, die ein stationäres Verhalten beschreibt, einer Funktion, die zur Modellierung des Rauschens einen Random-Walk darstellt und einer linearen Funktion, die ein Trend-Verhalten mit der Zeit / dem örtlichen Abstand beschreibt, zusammensetzt, um typische Effekte wie ein Untergrundrauschen oder ein Driften der Messwerte abbilden zu können. Die Messwerte lassen sich daher wie folgt beschreiben:

$$y_t = c_t + \delta t + u_t,$$

wobei $y_t$ die modellierten Messdaten in Abhängigkeit von der Zeit t (oder vom Ort) repräsentieren, $u_t$ ein stationäres Verhalten beschreibt, $c_t$ einen Random-Walk, um z.B. das Rauschen zu simulieren und $\delta t$ einen Trend, also ein "Weglaufen" oder "Driften" der Messwerte.

Durch diese Modellbeschreibung kann eine statistische Auswertung der zu erwartenden Fehler mathematisch in Bezug auf mögliche Fehler greifbar gemacht werden. Mit dieser Modellbeschreibung können statistische Größen wie der Erwartungswert, die Standardabweichung bzw. die Varianz berechnet werden. Bei einem stationären Verhalten kann der Erwartungswert durch Mittelwertbildung bestimmt werden. Aus dem Modell können auch die Abweichungen der gemessenen Werte von der Modellfunkton berechnet werden, die Residuen.

Da ein Trend-Verhalten der Messwerte, insbesondere ein kontinuierliches Driften der Messwerte einen Fehler darstellen würde, wird im Modell zunächst $\delta = 0$ angenommen.

Beim ersten Kriterium handelt es sich um eine Überprüfung, ob ein Sprung im mittleren Messdatenniveau plötzlich auftritt, ein sog. Level-Shift. Bei einem stationären Verhalten ist idealerweise die Varianz = 0. Ist den Messwerten ein Rauschen unterlegt, liegt die Varianz um einen bestimmten Erwartungswert (hier idealerweise der Mittelwert) herum. Die Volatilität der Random-Walk-Komponente $c_t$ ist gem. einer Nullhypothese gleich Null und nur bei insgesamt nicht stationärem Verhalten (auch unter Berücksichtigung eines unterlegen Rauschens) von Null verschieden. Bei nicht stationärem Verhalten ändert sich im Grunde auch der Erwartungswert, sofern dieser über aufeinanderfolgende Zeitintervalle neu bestimmt wird. In diesem Fall hat statistisch gesehen z.B. ein Sprung stattgefunden, der die Messwerte so stark insgesamt verschiebt, dass ein Abweichen vom Erwartungswert bei einer bestimmten Varianz infolge eines unterlegten Rauschen nicht mehr durch das Rauschverhalten zu erklären ist.

Für die Nullhypothese kann ein stationärer KPSS-Test benutzt werden (KPSS: Kwiatkowski, Phillips, Schmidt und Shin):

Für eine Anzahl T an Messwerten kann so eine Teststatistik für die Nullhypothese

$$\frac{\sum_{t=1}^{T} S_t^2}{s^2 T^2}$$

angenommen werden, wobei $S_t$ die Summe der Residuen $e_t$

$$S_t = e_1 + e_2 + e_3 + \ldots + e_t$$

an einzelnen Messpunkten t (in der Regel zu einzelnen Zeitpunkten t) bezogen auf die Modellfunktion bzw. Regressionskurve sind und $s^2$ die Varianz in Bezug auf den Erwartungswert. Bei der Überprüfung des ersten Kriteriums, ob ein Level-Shift vorliegt, ist es in der Regel vorteilhaft, eine vergleichsweise geringe Menge an Messdaten zugrunde zu legen, um hieraus die Summe in der Testfunktion zu bilden, weil es beim Vergleichen entsprechend auch nicht erforderlich ist, dass der Punkt, an dem potentiell ein Sprung der Daten erfolgt, in dem zu überprüfenden Zeit- oder Ortsintervall liegt. Diese Teststatistik folgt einer gewissen Verteilung. Zum Testen der Nullhypothese kann nun überprüft werden, wie wahrscheinlich die angegebene Teststatistik ist. Unterhalb einer gewissen Wahrscheinlichkeit bzw. Signifikanz kann angenommen werden, dass die Nullhypothese nicht zutrifft.

Der Signifikanzlevel a, der nicht überschritten werden sollte, kann z.B. bei 1% angenommen werden, sonst wird zu stark von der Teststatistik abgewichen und es ist eine Warnung abzugeben.

Ist die Volatilität der Modellfunktion = 0, so liegt ein stationäres Verhalten, dem allenfalls ein Rauschen unterlegt ist, vor.

Zur Überprüfung des zweiten Kriteriums, ob ein Trend-Verlauf vorliegt bzw. ob die die Messdaten kontinuierlich "wegdriften", ist es in der Regel notwendig, mehr Messpunkte auszuwerten und zu vergleichen. Ansonsten kann aber auch für dieses Kriterium der KPSS-Test angewandt werden. Als Bedingungen wird in der Modellfunkton immer noch vorausgesetzt, dass $\delta = 0$, da sonst ein Trend-Verhalten unterstellt werden muss, und es werden Autokorrelationen vernachlässigt.

Wenn nun die Signifikanz geringer als ein bestimmter, vorgegebener Wert ist und eine große Zahl an Messdaten verwendet wurde, kann ein Trend-Verhalten angenommen werden, das zweite Kriterium ist erfüllt.

Die Überprüfung des ersten und zweiten Kriteriums kann sich aber einzig durch die Zahl der Testdaten bzw. des gemessenen Zeitintervalls unterscheiden. Dabei wird entsprechend überprüft, ob:

- die Volatilität des Random-Walk-Terms sich von Null oder betragsgrößer als der Betrag eines vorgegebenen Werts ist und/oder

- die Teststatistik des stationären KPSS-Tests mit einer gewissen, vorgegebenen Wahrscheinlichkeit eingehalten wird oder nicht.

Zur Überprüfung des dritten Kriteriums, ob die Schwankungsbreite bzw. Schwankungsanfälligkeit stetig zunimmt, genügt es, die Varianzen in zwei unterschiedlichen Testphasen bzw. Messwertbereichen miteinander zu vergleichen. Die zu überprüfende Nullhypothese besteht darin, dass die Varianzen stets übereinstimmen oder zumindest nur mit einer vorgegebenen Wahrscheinlichkeit abweichen. Steigt die Schwankungsbreite, nimmt auch die Varianz in einem nachfolgenden Zeit- bzw. Messintervall zu. Die Menge an Testdaten kann geringer sein als bei der Überprüfung des zweiten Kriteriums zum Trend-Verlauf.

Statistisch gesehen kann somit wiederum die Signifikanz in Bezug auf einen festgelegten Wahrscheinlichkeitswert bestimmt werden, wobei, wenn die Signifikanz diesen Wahrscheinlichkeitswert unterschreitet, die Schwankungsbreite größer wird und das dritte Kriterium erfüllt ist.

Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:

Fig. 1:     eine schematische Darstellung eines Überwachungsverfahrens zur Fehlererkennung und Fehlervorhersage gem. der Erfindung,

Fig. 2-4:   verschiedene Messdatenserien, die von einem Rauschen überlagert sind, zur Verdeutlichung der Fehlererkennung,

Fig. 5:     eine Messdatenserie über einen größeren Zeitraum, die mit unterschiedlichen Fehlern behaftet ist, einschließlich einer Darstellung der Fehlerterme, sowie

Fig. 6      eine schematische Darstellung eines Systems, das zur Maschinenüberwachung von mehreren Vakuumpumpen dient.

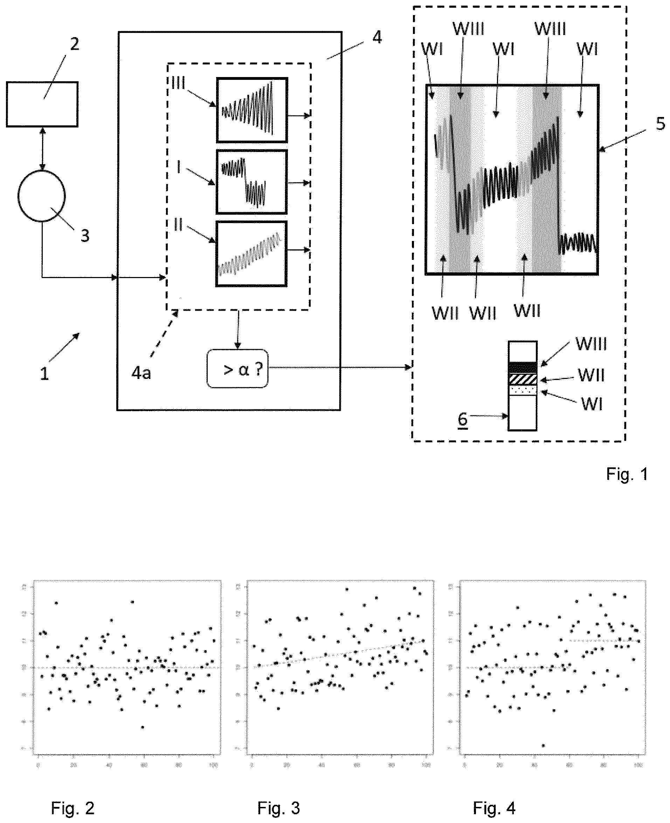

Figur 1 zeigt eine schematische Darstellung eines computerimplementierten Überwachungsverfahrens 1 zur Fehlererkennung und Fehlervorhersage gem. der Erfindung. Überwacht wird eine Anlage 2 mittels eines Sensors 3, der die gemessenen Daten an eine rechnergesteuerte Auswerteeinheit 4 sendet. Es kann sich bei dieser Auswerteeinheit 4 um eine Kontrolleinheit bzw. Steuerung, etwa innerhalb der Maschine handeln, sie kann separat auch auf einem Rechner ablaufen.

Die Auswerteeinheit 4 wertet die gemessenen Daten statistisch aus:
Sie gibt zunächst einen statistischen Signifikanzlevel vor, z.B. 1 % und ferner wenigstens ein Kriterium. Hier überprüft die Auswerteeinheit 4 drei Kriterien I, II und III, um herauszufinden:

-     Erstes Kriterium I:
      Liegt ein Level-Shift im Verlauf der Messdaten vor?

-     Zweites Kriterium II:
      Liegt ein Trend-Verlauf vor?

-     Drittes Kriterium III:
      Liegt eine Änderung der Volatilität bzw. Schwankungsanfälligkeit vor?

Ob eines der Kriterien erfüllt ist, wird anhand einer sog. Nullhypothese bestimmt.

Es wird dazu eine Modellfunktion zugrunde gelegt, die statistische Fehler zum Beispiel über einen Random-Walk abbildet, aber auch einen Term besitzt der das im Grunde ungewollte Trend verhalten beschreiben kann.

Das Trendverhalten wird zunächst als nicht vorhanden angesehen, d.h. der Term, der den Trend beschreibt, wird gleich Null gesetzt.

Für eine Zunahme an Volatilität III genügt es, die Varianzen zweier (zeitlich aufeinander folgender) sensorisch erfasster Teilfolgen zu untersuchen. Deren Verhältnis wäre idealerweise = 1. Es können zum Verhalten auch Teststatistiken herangezogen und überprüft werden, ob das Messwertverhalten der Teststatistik hinreichend nahekommt.

Beim Level-Shift-Verhalten (Kriterium I) ändert sich der Erwartungswert. Auch hier kann mit einer Teststatistik gearbeitet werden. Hier werden nicht so viele Messdaten benötigt, weil der Level-Shift erwartungsgemäß eher schnell vonstattengeht und deshalb über einen längeren Zeitraum nicht gemittelt werden sollte, um die Signaländerung zuverlässig erfassen zu können.

Beim Trendverhalten, dass auch sehr langsam ablaufen kann, muss über einen längeren Zeitraum gemessen werden, um die Änderung festzustellen.

Die Auswertung der Signifikanz und die Bestimmung der Abweichung von der jeweiligen Nullhypothese kann im Ausführungsblock 4a durchgeführt werden.

Ist eines der Kriterien I, II, III erfüllt, so wird von der Auswerteeinheit 4 eine erste Warnstufe WI ausgegeben. Analog wird bei zwei Kriterien eine zweite, kritischere Warnstufe WII und bei drei Kriterien eine besonders hohe Warnstufe WIII signalisiert. In Figur 1 ist der zeitliche Verlauf 5 der Messdaten angezeigt, wobei die Bereiche WI, WII, WIII, in denen jeweils ein bis drei Kriterien erfüllt sind, angezeigt werden. Denkbar ist auch, dass ein Maß für die Abweichung von der jeweiligen Nullhypothese bestimmt wird und dementsprechend die Warnstufen WI, WII, oder WIII gewählt werden.

Die Warnstufen WI, WII, WIII können entweder nur angezeigt werden, z.B. über ein Signalampel bzw. Signalsäule 6, es ist aber auch je nach Ausführungsform denkbar, dass die Auswerteeinheit 4 entsprechende Regelungsbefehle an die Anlage 2 sendet. Diese Befehle können auch daran angepasst sein, welche Fehlerquellen bei bestimmten Kriterien I, II, III typischerweise vorliegen.

Typischerweise muss davon ausgegangen werden, dass aufgenommene Messdaten einer Messdatenserie von einem Rauschen überlagert sind, wie es in den Figuren 2-4 jeweils der Fall ist. Aufgrund dieses überlagerten Rauschens sind die Messdaten in einzelnen Abschnitten der Messdatenserie so breit verteilt, dass eine Erkennung von Fehlern wie ein Trend-Verlauf oder ein Level-Shift erschwert wird. Gerade auch die Schwankungsanfälligkeit bzw. Volatilität ist rein grafisch schwieriger zu erkennen, wenn die durch das Rauschen bedingte Varianz der Messdaten vergleichsweise hoch ist und die Messwerte im Vergleich zu einem Mittelwert oder Erwartungswert zu höheren und niedrigeren Werten im Mittel gleich wahrscheinlich variieren können.

Fig. 2 zeigt ein Signal, das deutlich von einem Rauschen überlagert ist, aufgezeichnet als Messdatenserie. Im Mittel bleiben die Messdaten aber auf einem konstanten Niveau, welches als gepunktete Linie dargestellt ist. Trotz der hohen Varianz der Messwerte liegt in diesem Fall also eine gleichbleibende Volatilität vor; denn auch die Varianz wird nicht im zeitlichen Verlauf immer großer, sondern die Messdaten bleiben in diesem Abschnitt in im Wesentlichen gleichbleibender Streuung um den Mittel- / Erwartungswert. Über den Zeitraum gesehen liegen im Mittel also, abgesehen von statistischen Ausreißern der Messwerte, keine Signal-Schwankungen vor. Gemäß einer Auswertung nach dem dritten Kriterium III würde eine gleichbleibende Volatilität erkannt.

Fig. 3 zeigt auch ein von einem Rauschen überlagertes Signal. Im zeitlichen Verlauf jedoch steigen die Messwerte kontinuierlich an, es liegt ein Trend-Verlauf vor. Die gepunktete Linie, welche die Mittelwerte der Messdaten wiedergibt, ist eine Gerade mit positiver Steigung und zeigt das ansteigende Niveau an. Da aber auch hier die statistischen Schwankungen bzw. die Varianz der Daten hoch ist, ist dieser Trend ohne Auswertung eines Mittel- oder Erwartungswertes schwierig zu erkennen. Dieser Trend-Verlauf wird nach dem zweiten Kriterium II erkannt.

Fig. 4 zeigt eine analoge Situation bzgl. der Fig. 2-3, d.h. es liegt ein verrauschtes Signal vor, wobei unter Auswertung des Mittel- oder Erwartungswertes deutlich wird, dass im Verlauf ein plötzlicher Sprung der Messwerte (Level-Shift) auf ein höheres Niveau erfolgt. Der Mittel- oder Erwartungswert ist mit einer gepunkteten Linie dargestellt, die einen plötzlichen Sprung (Level-Shift) aufweist. Vor und nach diesem Sprungereignis sind die Messdaten im Mittel jeweils konstant in diesen zeitlichen Teilbereichen. Für diesen Fall ist entsprechend eine Auswertung nach dem ersten Kriterium I relevant.

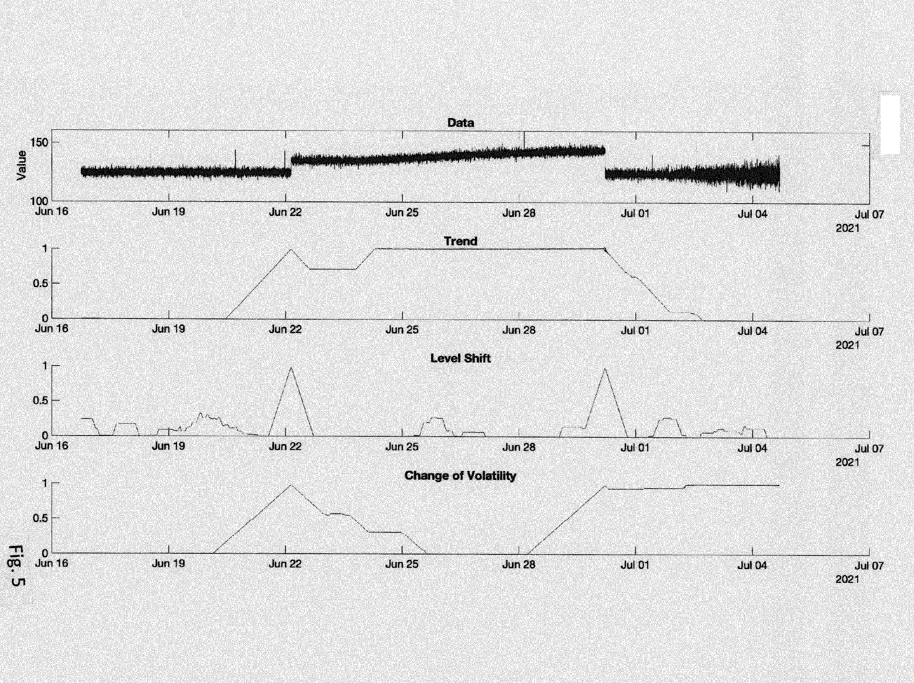

Ein Verlauf einer Messdatenserie über einen längeren Zeitraum von 19 Tagen ist in der ersten Zeile von Figur 5 ("Value") dargestellt. Die weiteren Zeilen beschreiben jeweils auf einer Skala von 0 bis 1 die Terme in der Modellfunktion, welche den Trend-Verlauf (Kriterium II), den Level-Shift (Kriterium I) und die Volatilität (Kriterium III) beschreiben.

Im Messdatenverlauf ("Value") ist zu erkennen, dass die Messwerte über den gesamten Zeitraum von einem statistischen Rauschen überlagert sind. Auch dieses Rauschen schwankt in seiner Intensität, d.h. die Varianz ist zum Beispiel im Bereich um den 4.Juli deutlich größer als noch im Bereich des 17. bis ca. 20. Juni. Im Mittel sind die Werte aber im Bereich vom 17. Juni bis ca. 20. Juni konstant und die Schwankungen in geringerem Rahmen statistisch bedingt, was sich dadurch in der letzten Zeile von Figur 5 zeigt, dass die Volatilität bis zum 20. Juni den Wert 0 einnimmt. Auch beim Trend-Verlauf in der zweiten Zeile liegt der Wert bis zum 20. Juni konstant bei 0, da sich das Signalniveau im Mittel nicht verändert.

Anders ist das Verhalten der Messdaten vom 30. Juni bis 5. Juli. Hier schaukeln sich die Abweichungen kontinuierlich auf, während das Signalniveau im Mittel konstant bleibt. Die Varianz wird größer. Das Sich-Aufschaukeln der Abweichungen erhöht den Wert der Volatilität ab dem 30. Juni. Das konstante Signalniveau im Mittel zeigt sich durch einen Trend-Wert im Bereich von 0 in diesem Zeitraum.

An zwei diskreten Stellen, nämlich zu einem Zeitpunkt um den 22./23. Juni und um den 30. Juni ändert sich sprunghaft der Signal-Level, was sich in der dritten Zeile durch jeweils einen isolierten Peak genau zu diesem Zeitpunkt bemerkbar macht. Auch Trend und Volatilität zeigen zu diesen Zeitpunkten jeweils Änderungen, auch als singuläre Spitzen im Signalverlauf, weil sich mit dem Sprung auch der Signal-Verlauf (Trend) geändert hat bzw. eine Abweichung erfolgt ist, die hier auch die Varianz übersteigt.

Zwischen dem 22./23. Juni und dem 30. Juni erhöht sich das Messsignal kontinuierlich und steigt leicht an. Daher ist in diesem Zeitraum in Zeile 2 der Figur 5 der Trend-Wert bei Werten im Bereich 1, weil ein ansteigender Trend-Verlauf vorliegt.

Die dritte Zeile von Fig. 5 zeigt den Term des Level-Shifts, bei dem, wie oben beschrieben, vor allem die Peaks im Bereich um den 22./23. Juni und um den 30. Juni auffallen. Außerhab dieser beiden Peaks hält sich der Level-Term im Bereich gegen 0, zeigt aber unregelmäßige Abweichungen. Dies liegt daran, dass das Messsignal ("Value") im Mittel statistisch, je nachdem, welchen Bereich man betrachtet, nicht immer konstant ist, d.h. das Signalniveau, das ohnehin einem Rauschen unterlegen ist, ändert sich etwas.

Zudem können zwischendurch auftretende höhere statistische Schwankungen und/oder eine Änderungen des Levels, wie hier um den 22./23. Juni und um den 30. Juni dazu führen, dass auch im Bereich des Volatilitätsterms sich der Wert kurzzeitig ändert und ungleich 0 ist, weil das Signal eine Änderung in Form eines Sprungs erfährt,, der auch größer ist als die durch Rauschen bedingte Varianz, d.h. die Schwankungsanfälligkeit des Signals hat auch hier eine Änderung erfahren.

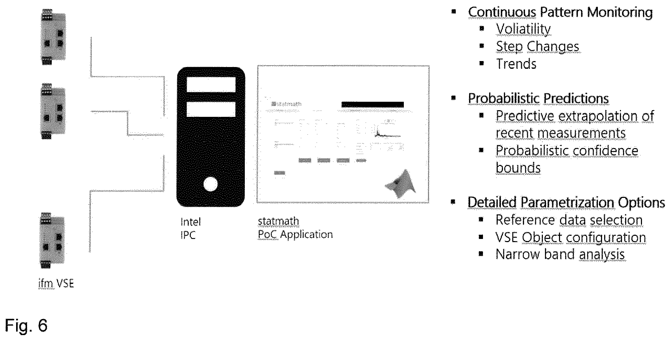

Figur 6 zeigt ein Schema eines Systems zur Überwachung von Vakuumpumpen mit Schwingungssensoren mit Diagnoseelektronik für die Prozessüberwachung. Hier handelt es sich um Schwinungssensoren vom Herstellertyp "ifm VSE". Die Signale werden an einen Prozessor zur Auswertung gesendet. Mehrere Takte des getakteten Prozesses werden zu einem Maschinenzyklus zusammengefasst. Kontinuierlich erfolgt, unterstützt von einer numerischen Auswertesoftware, eine Analyse der Messdaten (continuous pattern monitoring), um die Volatilität, stufenartige Änderungen (level shifts) oder Trend-Verläufe zu analysieren. Hierzu werden auch Mittel- oder Erwartungswerte berechnet. Mit Methoden der Wahrscheinlichkeitsrechnung wird zur Vorhersage der Datenentwicklung eine Extrapolation der letzten Messdaten durchgeführt, oder es wird geprüft, ob die Messdaten mit einer bestimmten Wahrscheinlichkeit in festgelegten Bereichen eines Konfidenzbands oder außerhalb des Konfidenzbandes liegen.

Selektiv kann eine Parametrisierung zugrunde gelegt werden, die eine nähere Analyse nach bestimmten Kriterien oder Parametern vorsieht (detailed parametrization options), z.B.:

- Auswahl von Referenzdaten aus der Datenmenge und/oder
- Konfiguration von Objekten bei der Schwingungsanalyse und/oder
- Analyse mit Hilfe enger Konfidenzbänder, um bereits geringer Abweichungen bzw. Stabilität von Messdaten herauszufinden.

Der Anwender hat in der Regel zwei Möglichkeiten, je nach Ausführungsvariante der Erfindung, den Pattern Monitor zu trainieren:

- Variante A: "Supervised": Der Nutzer markiert in historischen Daten händisch vorhandene Muster, beispielsweise einen Trend, der in einem spezifischen Zeitraum in den historischen Daten vorlag (oder analog zur Volatilität oder einem Sprung). Daraufhin parametriert sich der Algorithmus so, dass genau dieser Zeitraum erkannt worden wäre und alle anderen Zeiträume nicht, falls dies möglich ist mit den Testverfahren. Hierbei wird auch überprüft, ob der Nutzer Markierungen vergessen hat oder einen Bereich markiert hat, der gar kein Muster ausweist.

- Variante B: "Unsupervised": Der Nutzer lädt einen Zeitraum ein, der stationär ist und keines der Muster enthält. Dann wird der Algorithmus so trainiert, dass er im ausgewählten Zeitraum keinen Alarm / kein Warnsignal ausgegeben hätte, dabei aber so sensitiv wie möglich parametriert ist (z.B. enges Konfidenzband), also bei kleinsten Veränderungen / Mustern ausschlagen würde. Hierbei wird auch überprüft, ob es doch ganz sicher Muster in den Daten gibt, die der Benutzer nur vergessen hat zu markieren.

In vorteilhafter Weise ermöglicht das erfindungsgemäße Überwachungsverfahren, eine statistische Auswertung von Messdaten vorzunehmen, die teilweise unter anderem auch statistischen Fehlern unterworfen sind, etwa von einem Rauschen überlagert werden, und etwaige Fehler auf diese Weise zu erkennen. Das Verfahren gemäß der Erfindung bedient sich vornehmlich statistischer Methoden und ist weitgehend universell, unabhängig vom zu überwachenden Maschinentyp / Hardwaretyp, weil im Grunde das Auftreten von statistischen Fehlern von Fehlern, die durch echte Fehlfunktionen bedingt sind, unterschieden wird. Erfindungsgemäß geschieht dies unter Bestimmung von Abweichungen von einer Nullhypothese und der Auswertung einer statistischen Signifikanz gegenüber einem zu vorbestimmten Signifikanzlevel. Die Einstufung in verschiedene Kategorien anhand der Anzahl an erfüllten Fehlerkriterien und/oder anhand des Grades der Abweichung ermöglicht bei einer Weiterbildung die Einstufung der Ernsthaftigkeit der Situation.

Bezugszeichenliste

1 Überwachungsverfahren
2 zu überwachende Anlage
3 Sensor
4 Auswerteeinheit
4a Signifikanz-Berechnung bezüglich Nullhypothese
5 Messdaten mit Fehlerkategorisierung
6 Signalsäule
I Kriterium (Volatilität)
II Kriterium (Level-Shift)
III Kriterium (Trend-Verhalten)
WI erste Warnstufe
WII zweite Warnstufe
WIII dritte Warnstufe
α Signifikanzlevel

**Patentansprüche**

1. Computerimplementiertes Überwachungsverfahren (1) zur Fehlererkennung eines Maschinenfehlers und/oder Hardwarefehlers in einem maschinell betriebenen und/oder unterstützten Produktionsprozess, umfassend:

• Erfassung wenigstens einer Serie in dem Prozess gemessener Sensordaten (5) in einer zeitlichen und/oder örtlichen Abfolge, **dadurch gekennzeichnet, dass**
• eine statistische Auswertung (4) der wenigstens einen Serie oder wenigstens eines Teils der wenigstens einen Serie vorgenommen wird, um jeweils eine Abweichung der gemessenen Sensordaten (5) nach wenigstens einem Kriterium (I, II, III) zu ermitteln,

wobei die statistische Auswertung:

• eine Nullhypothese bereitstellt,
• einen Erwartungswert für die gemessenen Sensordaten bereitstellt,
• die Berechnung der statistischen Signifikanz hinsichtlich einer Abweichung von einer vorgegebenen Nullhypothese vorsieht und
• eine Warnung ausgibt, wenn die statistische Signifikanz von der Nullhypothese abweicht und/oder wenn bei einem vorgegebenen Signifikanzlevel α die Wahrscheinlichkeit eines Abweichens von der Nullhypothese größer als der Signifikanzlevel α ist.

2. Computerimplementiertes Überwachungsverfahren (1) nach Anspruch 1, **dadurch gekennzeichnet, dass** bei der statistischen Auswertung (4) zum Testen eines ersten der Kriterien (I) überprüft wird, ob ein Sprung des mittleren Sensordatenniveaus in zeitlicher und/oder örtlicher Abfolge vorliegt.

3. Computerimplementiertes Überwachungsverfahren (1) nach einem der vorgenannten Ansprüche, **dadurch gekennzeichnet, dass** bei der statistischen Auswertung (4) zum Testen eines zweiten der Kriterien (II) überprüft wird, ob ein Trend einer kontinuierlichen Veränderung des mittleren Sensordatenniveaus in zeitlicher und/oder örtlicher Abfolge vorliegt.

4. Computerimplementiertes Überwachungsverfahren (1) nach einem der vorgenannten Ansprüche, **dadurch gekennzeichnet, dass** bei der statistischen Auswertung zum Testen eines dritten der Kriterien (III) überprüft wird, ob sich die Schwankungsanfälligkeit in der Serie in zeitlicher und/oder örtlicher Abfolge ändert.

5. Computerimplementiertes Überwachungsverfahren (1) nach einem der vorgenannten Ansprüche, **dadurch gekennzeichnet, dass** die statische Auswertung die Ausgabe einer wenigstens dreistufigen Warnung (WI, WII, WIII) vorsieht, wobei jeder Anzahl an erfüllten Kriterien (I, II, III) jeweils eine Warnstufe (WI, WII, WIII) zugeordnet wird.

6. Computerimplementiertes Überwachungsverfahren (1) nach einem der vorgenannten Ansprüche, **dadurch gekennzeichnet, dass** als Modellfunktion für das Verhalten der Sensordaten (5) in der Serie folgende Funktion verwendet wird:

$$y_t = c_t + \delta t + u_t,$$

wobei $y_t$ die modellierten Sensordaten in Abhängigkeit von $t$, $c_t$ einen Random-Walk beschreibt, $\delta$ einen Trend und $\delta t$ ein lineares Trendverhalten sowie $u_t$ ein stationäres Verhalten, wenn die Sensordaten der Serie über t aufgetragen werden, wobei t den zeitlichen und/oder örtlichen Verlauf beschreibt.

7. Computerimplementiertes Überwachungsverfahren (1) nach einem der vorgenannten Ansprüche, **dadurch gekennzeichnet, dass** zur Überprüfung des ersten Kriteriums (I) die Nullhypothese verwendet wird, dass die Varianz als mittlere quadratische Abweichung vom Erwartungswert und Volatilität der Random-Walk-Terms $c_t$ null ist, wobei insbesondere hinsichtlich der Modellfunktion angenommen wird, dass der Trend $\delta = 0$.

8. Computerimplementiertes Überwachungsverfahren (1) nach einem der vorgenannten Ansprüche, **dadurch gekennzeichnet, dass** zur Überprüfung des ersten und/oder zweiten Kriteriums (I) ein stationärer KPSS-Test durchgeführt wird, wobei als Nullhypothese überprüft wird, ob eine Teststatistik mit einer vorgegebenen Wahrscheinlichkeit erfüllt wird, wobei als Teststatistik insbesondere verwendet wird:

$$\frac{\sum_{t=1}^{T} S_t^2}{s^2 T^2}$$

als Summe der Quadrate der Summe $S_t$ über den Teil T der Abfolge, wobei $S_t$ wiederum die Summe der Residuen in Bezug auf die Regressionskurve der gemessenen Sensordaten an einzelnen Stellen t ist, im Verhältnis zum Produkt aus Varianz $s^2$ multipliziert mit dem Quadrat der Anzahl des Abfolgeteils T, wobei eine Warnung ausgegeben wird, wenn mit weniger als einer vorgegebenen Wahrscheinlichkeit die Teststatistik nicht erfüllt wird.

9. Computerimplementiertes Überwachungsverfahren (1) nach einem der vorgenannten Ansprüche, **dadurch gekennzeichnet, dass** zur Überprüfung des ersten und/oder des zweiten Kriteriums Autokorrelationen, welche insbesondere bei Signalverzögerungen in Form von durch Verzögerung beeinflussten Sensordaten berücksichtigt und/oder herausgerechnet und/oder vernachlässigt werden.

10. Computerimplementiertes Überwachungsverfahren (1) nach einem der vorgenannten Ansprüche, **dadurch gekennzeichnet, dass** zur Überprüfung des zweiten Kriteriums (II) ein größerer Teil der Abfolge mit mehr Sensordaten verwendet wird als zur Überprüfung des ersten Kriteriums (I).

11. Computerimplementiertes Überwachungsverfahren (1) nach einem der vorgenannten Ansprüche, **dadurch gekennzeichnet, dass** zur Überprüfung des dritten Kriteriums (III) wenigstens zwei Teilfolgen von Sensordaten aufgenommen werden.

12. Computerimplementiertes Überwachungsverfahren (1) nach einem der vorgenannten Ansprüche, **dadurch gekennzeichnet, dass** zur Überprüfung des dritten Kriteriums (III) als Nullhypothese eine Teststatistik F verwendet wird, welche das Verhältnis der Varianzen der beiden Testfolgen bildet, und als Nullhypothese angenommen wird, dass F =1.

13. Computerimplementiertes Überwachungsverfahren (1) nach einem der vorgenannten Ansprüche, **dadurch gekennzeichnet, dass** die Warnungen an eine Signalsäule übermittelt werden, wobei:

   • jeder Warnstufe in Abhängigkeit von der Zahl der Warnungen ein anderes Leuchtzeichen an der Signalsäule zugeordnet wird und/oder
   • je nach Abweichung von der Nullhypothese ein anderes Leuchtzeichen an der Signalsäule zugeordnet wird.

14. Computerimplementiertes Überwachungsverfahren (1) nach einem der vorgenannten Ansprüche, **da-**

**durch gekennzeichnet, dass** bei der Erfassung die Daten eines Zeitraums geladen werden, der stationär ist und insbesondere keines der Muster enthält, wobei anschließend der Algorithmus so trainiert wird, dass er im ausgewählten Zeitraum keinen Alarm und/oder kein Warnsignal ausgegeben hätte, dabei aber so sensitiv wie möglich parametriert ist, z.B. durch ein enges Konfidenzband, also bei entsprechend kleinen Veränderungen und/oder Mustern ausschlagen würde.

Fig. 1

Fig. 2

Fig. 3

Fig. 4

Fig. 5

- Continuous Pattern Monitoring
  - Voliatility
  - Step Changes
  - Trends

- Probabilistic Predictions
  - Predictive extrapolation of recent measurements
  - Probabilistic confidence bounds

- Detailed Parametrization Options
  - Reference data selection
  - VSE Object configuration
  - Narrow band analysis

Intel
IPC

statmath
PoC Application

ifm VSE

Fig. 6

Europäisches
Patentamt

European
Patent Office

Office européen
des brevets

**EUROPÄISCHER RECHERCHENBERICHT**

**Nummer der Anmeldung**

**EP 22 18 4559**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SHALALFEH LAITH ET AL: "Fractional Dynamics of PMU Data", IEEE TRANSACTIONS ON SMART GRID, IEEE, USA, Bd. 12, Nr. 3, 15. Dezember 2020 (2020-12-15), Seiten 1-11, XP011850407, ISSN: 1949-3053, DOI: 10.1109/TSG.2020.3044903 [gefunden am 2021-04-20] * das ganze Dokument * ----- | 1-14 | INV. G05B23/02 |
| X | EP 0 907 913 B1 (PULP PAPER RES INST [CA]) 26. Juni 2002 (2002-06-26) * Absätze [0014] - [0018], [0031] - [0039]; Abbildungen 8A,8B * ----- | 1-14 | |

RECHERCHIERTE
SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| München | 6. Dezember 2022 | Barriuso Poy, Alex |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

**EP 22 18 4559**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**06-12-2022**

| Im Recherchenbericht angeführtes Patentdokument | Datum der Veröffentlichung | Mitglied(er) der Patentfamilie | Datum der Veröffentlichung |
|---|---|---|---|
| EP 0907913 B1 | 26-06-2002 | AU 2562997 A | 19-11-1997 |
| | | BR 9708843 A | 13-04-1999 |
| | | CA 2252868 A1 | 06-11-1997 |
| | | DE 69713600 T2 | 27-02-2003 |
| | | EP 0907913 A1 | 14-04-1999 |
| | | ES 2178770 T3 | 01-01-2003 |
| | | JP 2000509178 A | 18-07-2000 |
| | | WO 9741494 A1 | 06-11-1997 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018222562 A1
- EP 0934567 A1
- DE 102019107363 A1